# EUROPÄISCHE PATENTSCHRIFT

(11) **EP 2 045 477 B1**
(45) Veröffentlichungstag und Bekanntmachung des Hinweises auf die Patenterteilung: **26.09.2012**
(21) Anmeldenummer: 08017179.6
(22) Anmeldetag: 30.09.2008
(51) Int. Cl.: F16C 33/66, F16C 35/04

(54) **Lageranordnung zur drehbaren Lagerung eines Maschinenteils**
Bearing assembly for rotatable mounting of a machine section
Agencement de stockage destiné au stockage rotatif d'une partie de machine

(30) Priorität: 02.10.2007 DE 202007013781 U
(43) Veröffentlichungstag der Anmeldung: 08.04.2009
(73) Patentinhaber: AB SKF, 415 50 Göteborg (SE)
(72) Erfinder: Schweitzer, Ferdinand, 3352 St. Peter in der Au (AT); Lapczcuk, Alexander, 4400 Steyr (AT)
(74) Vertreter: Kohl, Thomas

(56) Entgegenhaltungen:
- EP-A1- 1 538 357
- WO-A1-2007/040427
- US-A- 4 241 959

## Beschreibung

Die Erfindung betrifft eine Lageranordnung zur drehbaren Lagerung eines Maschinenteils.

Um einen ordnungsgemäßen Betrieb einer Lageranordnung zu ermöglichen, ist in der Regel eine Schmierung der in der Lageranordnung vorhandenen Lagerstellen erforderlich. Hierzu kann ein Schmiermittel beispielsweise dadurch bereitgestellt werden, dass die Lageranordnung gegen die Umgebung abgedichtet und in ihrem Innenraum mit einem anfänglichen Schmiermittelvorrat versehen wird. Nach einer gewissen Grebrauchsdauer der Lageranordnung kann dann von außen nachgeschmiert werden, um einen etwaigen Schmiermittelverlust auszugleichen. Anstelle eines Nachschmierens nach vorgegebenen Zeitintervallen, kann auch eine kontinuierliche Schmiermittclzufuhr erfolgen. Insbesondere kann die Schmiermittelzufuhr auch mittels einer in die Lageranordnung integrierten Schmiereinrichtung erfolgen.

So ist aus der EP 1 538 357 A1 eine Lagereinrichtung bekannt, bei der eine Schmiermittel-Versorgungseinheit zwischen gegenüberliegenden Laufbahnen der Lagereinrichtung angeordnet ist. Die Schmiennittel-Versorgungseinheit weist eine Pumpe zum Ausstoßen von Schmiermittel und einen Antrieb auf, welcher die Pumpe antreibt. Weiterhin weist die Schmiermittel-Versorgungseinheit einen Tank auf, der demontiert und dann aufgefüllt oder gegen einen gefüllten Tank ausgetauscht werden kann.

Der Erfindung liegt die **Aufgabe** zugrunde, eine Lageranordnung so auszubilden, dass sie vergleichsweise leicht montierbar ist und zudem auf eine externe Nachschmierung verzichtet werden kann.

Diese Aufgabe wird durch eine Lageranordnung mit der Merkmalskombination des Anspruchs 1 gelöst.

Die crfindungsgemäße Lageranordnung zur drehbaren Lagerung eines Maschinenteils weist ein Lager, ein Reservoir zur Aufnahme von Schmiermittel und eine elektrische Fördereinrichtung zum Fördern des Schmiermittels auf. Das Lager, das Reservoir und die elektrische Fördereinrichtung sind jeweils wenigstens zum Teil innerhalb eines gegen die Umgebung abgedichteten Innenraums der Lageranordnung angeordnet und als Bestandteile eines geschlossenen Fluid-Kreislaufs für das Schmiermittel ausgebildet.

Die Erfindung hat den Vorteil, dass die Lageranordnung sehr kompakt ausgebildet und eine zuverlässige Schmierung des Lagers ohne externe Nachschmierung gewährleistet ist. Das Schmiermittel kann sehr genau dosiert werden, so dass nicht mit einem Schmiermittelüberschuss im Bereich des Lagers gearbeitet werden muss. Ein weiterer Vorteil besteht in der leichten Montierbarkeit der Lageranordnung.

Die Lageranordnung kann so ausgebildet sein, dass ein weiteres Lager und/oder ein weiteres Reservoir und/oder eine weitere elektrische Fördereinrichtung wenigstens zum Teil innerhalb des Innenraums angeordnet sind. Dadurch ist eine sehr universelle Einsatzmöglichkeit der Lageranordnung gegeben.

Das Lager und/oder das Reservoir und/oder die elektrische Fördereinrichtung können vollständig im Innenraum angeordnet sein. Dadurch ergibt sich ein besonders kompakter und robuster Aufbau.

Das Lager und/oder das weitere Lager können einen äußeren Lagerring aufweisen und die elektrische Fördereinrichtung und/oder die weitere elektrische Fördereinrichtung und/oder das Reservoir und/oder das weitere Reservoir können vollständig radial innerhalb des Außendurchmessers des äußeren Lagerrings angeordnet sein. Dies hat den Vorteil, dass für diese Komponenten in Radialrichtung kein zusätzlicher Montageraum benötigt wird.

Das Reservoir und die elektrische Fördereinrichtung und/oder die weitere elektrische Fördereinrichtung können als integrale Bestandteile einer Schmiereinrichtung ausgebildet sein. Auf diese Weise kann die Zahl der losen Einzelteile bei der Montage reduziert und eine besonders leichte Montierbarkeit erreicht werden. Insbesondere kann die Schmiereinrichtung als ein Ringkörper ausgebildet sein. Die elektrische Fördereinrichtung und/oder die weitere elektrische Fördereinrichtung können in einem ersten Umfangsabschnitt und das Reservoir in einem zweiten Umfangsabschnitt des Ringkörpers angeordnet sein. Diese Maßnahmen ermöglichen eine kompakte Ausführung der Schmieranordnung und eine platzsparende Montage.

Die elektrische Fördereinrichtung kann für eine Schmiermiltelförderung vom Reservoir zum Lager ausgelegt sein. Die Lageranordnung ist vorzugsweise so ausgebildet, dass das Reservoir im Betriebszustand der Lageranordnung in Schwerkraftrichtung unterhalb des Lagers angeordnet ist. Weiterhin kann das weitere Reservoir im Betriebszustand der Lageranordnung in Schwerkraftrichtung unterhalb des Reservoirs und/oder oberhalb des weiteren Lagers angeordnet sein. Durch diese Maßnahmen kann die Schwerkraft für den Rückfluss des Schmiermittels in das Reservoir bzw. in das weitere Reservoir genutzt werden.

Die weitere elektrische Fördereinrichtung kann für eine Schmiermittelförderung vom weiteren Reservoir zum Reservoir ausgelegt sein.

Die Lageranordnung kann einen Anschluss für eine externe Stromversorgung aufweisen.

Weiterhin kann die Lageranordnung eine Düse zur Schmiermittelzufuhr zum Lager und/oder eine weitere Düse zur Schmiermittelzufuhr zum weiteren Lager aufweisen. Dadurch ist eine sehr genaue Dosierung des Schmiermittels möglich.

Bei einer Weiterbildung der Lageranordnung kann wenigstens eine Sensoreinrichtung vorhanden sein. Dies eröffnet die Möglichkeit, die tatsächlichen Verhältnisse in der Lageranordnung zu ermitteln und eine bedarfsgerechte Schmiermittelzufuhr vorzunehmen.

Das Maschinenteil kann beispielsweise als eine Welle, insbesondere als eine Welle eines Separators, ausgebildet sein. Dabei kann die Welle im Betriebszustand der Lageranordnung eine Orientierung aufweisen, welche nicht mehr als 30° von der Vertikalen abweicht. Das Lager und/oder das weitere Lager können als Wälzlager ausgebildet sein. Insbesondere können das Lager und/oder das weitere Lager als Kugellager, beispielsweise als Schrägkugellager, ausgebildet sein. Bei der Lageranordnung wird vorzugsweise ein flüssiges Schmiermittel, beispielsweise ein Öl, eingesetzt.

Die Erfindung wird nachstehend anhand der in der Zeichnung dargestellten Ausführungsbeispiele erläutert.

Es zeigen:
- Figur 1: ein Ausführungsbeispiel einer erfindungsgemäß ausgebildeten Lageranordnung in Schnittdarstellung,
- Figur 2: ein Ausführungsbeispiel für die Schmiereinrichiung in Schnittdarstellung und
- Figur 3: das in Figur 2 dargestellte Ausführungsbeispiel der Schmiereinrichtung in einer weiteren Schnittdarstellung.

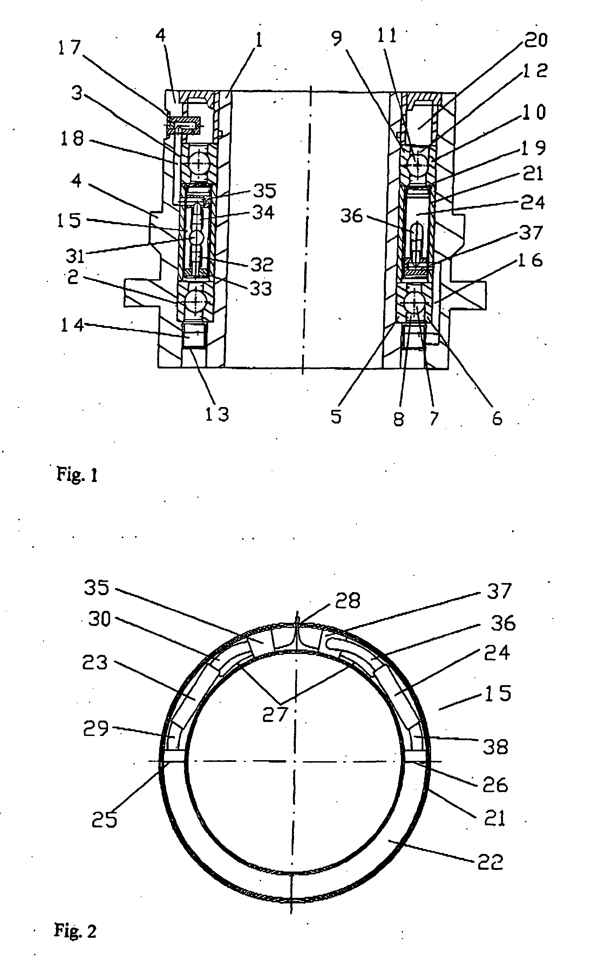

Figur 1 zeigt ein Ausführungsbeispiel einer erfindungsgemäß ausgebildeten Lageranordnung in Schnittdarstellung. Die dargestellte Lageranordnung kann beispielsweise bei einem Separator eingesetzt werden. Separatoren kommen insbesondere in der Lebensmittelindustrie zum Einsatz.

In Figur 1 ist eine vertikal, d. h. parallel zur Schwerkraftrichtung angeordnete Hohlwelle 1 dargestellt, die mittels zweier Lager 2, 3 drehbar in einem Gehäuse 4 gelagert wird. Die Lager 2, 3 sind als Schrägkugellager ausgebildet und räumlich übereinander angeordnet. Das in Figur 1 unten dargestellte Lager 2 wird im Folgenden als unteres Lager 2, das in Figur 1 oben dargestellte Lager 3 als oberes Lager 3 bezeichnet.

Das untere Lager 2 weist einen Innenring 5, einen Außenring 6, Wälzkörper 7 und einen Käfig 8 auf. Der Innenring 5 ist vorzugsweise drehfest auf der Hohlwelle 1 angeordnet. Der Außenring 6 ist vorzugsweise drehfest im Gehäuse 4 angeordnet. Die Wälzkörper 7 rollen auf dem Innenring 5 und auf dem Außenring 6 ab und werden dabei im Käfig 8 geführt.

Das obere Lager 3 weist einen Innenring 9, einen Außenring 10, Wälzkörper 11 und einen Käfig 12 auf, die in analoger Weise wie die entsprechenden Komponenten des unteren Lagers 2 angeordnet sind.

Unterhalb des unteren Lagers 2 ist ein unteres Reservoir 13 angeordnet, das zum Teil mit einem flüssigen Schmiermittel 14, beispielsweise Öl, gefüllt ist. Das untere Reservoir 13 kann beispielsweise als ein Ringkörper mit einem U-förmige Querschnitt ausgebildet sein.

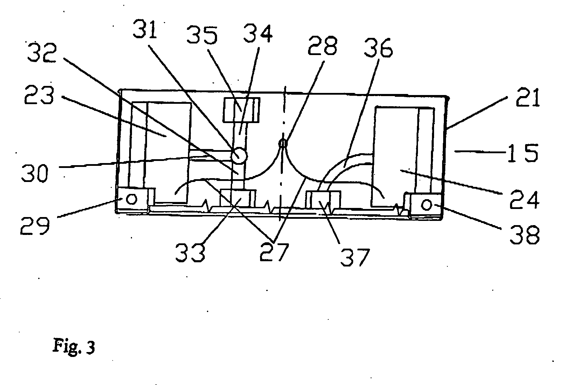

Axial zwischen dem unteren Lager 2 und dem oberen Lager 3 ist eine Schmiereinrichtung 15 angeordnet. Der Aufbau und die Funktionsweise der Schmiereinrichtung 15 werden im Folgenden noch näher erläutert, wobei auch auf die Figuren 2 und 3 Bezug genommen wird. Über einen unteren Kanal 16 ist die Schmiereinrichtung 15 fluidisch mit dem unteren Reservoir 13 verbunden.

Oberhalb des oberen Lagers 3 ist eine obere Düse 17 angeordnet, die über einen oberen Kanal 18 mit der Schmiereinrichtung 15 fluidisch verbunden ist. Die Schmiereinrichtung 15 ist durch eine Abdeckung 19 abgedeckt, welche unterhalb des oberen Lagers 3 angeordnet ist.

Durch die vorstehend genannten Komponenten der Lageranordnung und einer Reihe von Ringkörpern, die ohne nähere Bezeichnung in der Figur 1 dargestellt sind, wird ein fluidisch zusammenhängender Innenraum 20 gebildet. Dabei sind die Komponenten der Lageranordnung so ausgebildet, dass ein Austritt von Schmiermittel 14 aus dem Innenraum 20 in die Umgebung verhindert wird.

Figur 2 zeigt ein Ausführungsbeispiel für die Schmicreinrichtung 15 in Schnittdarstellung. Eine weitere Schnittdarstellung, bei der die Schnittebenen senkrecht zu der in Figur 2 gewählten Schnittebene verläuft, zeigt Figur 3.

Die Schmiereinrichtung 15 ist insgesamt ringförmig ausgebildet und weist eine Ummantelung 21, ein oberes Reservoir 22 zur Aufnahme von Schmiermittel 14 sowie eine erste Mikropumpe 23 und eine zweite Mikropumpe 24 zur Förderung von Schmiermittel 14 auf. Die Ummantelung 21 kann beispielsweise einen U-förmigen Querschnitt aufweisen und einen Ringraum einschließen. In Figur 3 ist die Ummantelung 21 teilweise entfernt, um den Blick auf das Innere der Schmiereinrichtung 15 freizugeben. Durch zwei Trennwände 25, 26 wird der Ringraum in Umfangsrichtung unterteilt und dadurch das obere Reservoir 22 ausgebildet.

Die Mikropumpe 23, 24 werden elektrisch betrieben und sind über Kabel 27 mit einem externen Stromanschluss 28 verbunden, über den die Mikropumpen 23, 24 an eine nicht figürlich dargestellte externe Stromversorgung angeschlossen werden können.

Die erste Mikropumpe 23 ist auf ihrer Saugseite über ein Verbindungsstück 29, das in eine Durchbrechung in der Trennwand 25 mündet, fluidisch mit dem oberen Reservoir 22 verbunden. Auf ihrer Druckseite ist die erste Mikropumpe 23 über ein Verbindungsstück 30 fluidisch mit einem T-Stück 31 verbunden, an das über ein Verbindungsstück 32 eine untere Düse 33 und über ein Verbindungsstück 34 ein oberes Umlenkstück 35 angeschlossen sind. Aus Figur 1 ist ersichtlich, dass die untere Düse 33 derart oberhalb des unteren Lagers 2 angeordnet ist, dass ihre Öffnung zum unteren Lager 2 hin zeigt. Weiterhin geht aus Figur 1 hervor, dass das obere Umlenkstück 35 in den oberen Kanal 18 mündet, an den wiederum die obere Düse 17 angeschlossen ist. Dies bedeutet, dass die Druckseite der ersten Mikropumpe 23 sowohl mit der oberen Düse 17 als auch mit der unteren Düse 33 fluidisch verbunden ist und somit Schmiermittel 14 aus dem oberen Reservoir 22 zum oberen Lager 3 und zum unteren Lager 2 fördern kann.

Die zweite Mikropumpe 24 ist auf ihrer Saugseite über ein Verbindungsstück 36 fluidisch mit einem unteren Umlenkstück 37 verbunden. Auf ihrer Druckseite ist die zweite Mikropumpe 24 über ein Verbindungsstück 38, das in eine Durchbrechung in der Trennwand 26 mündet, fluidisch mit dem oberen Reservoir 22 verbunden. Wie aus Figur 1 hervorgeht mündet das untere Umlenkstück 37 in den unteren Kanal 16, so dass die Saugseite der zweiten Mikropumpe 24 fluidisch mit dem unteren Reservoir 13 verbunden ist. Somit kann die zweite Mikropumpe 24 Schmiermittel 14 vom unteren Reservoir 13 zum oberen Reservoir 22 fördern.

Im Betriebszustand der Lageranordnung, d. h. wenn sich die Hohlwelle 1 relativ zum Gehäuse 4 dreht, wird den beiden Mikropumpen 23, 24 von außen über den Stromanschluss 28 und die Kabel 27 Strom zugeführt. Durch die Stromzufuhr werden die Mikropumpen 23, 24 in Betrieb genommen und fördern Schmiermittel 14 von ihrer Saugseite zu ihrer Druckseite.

Dies bedeutet, dass die erste Mikropumpe 23 aus dem oberen Reservoir 22 Schmiermittel 14 zur oberen Düse 17 und zur unteren Düse 33 fördert. Das aus der oberen Düse 17 austretende Schmiermittel 14 gelangt zum oberen Lager 3. Anschließend strömt das Schmiermittel 14 vom oberen Lager 3 der Schwerkraft folgend wieder zum oberen Reservoir 22. Das aus der unteren Düse 33 austretende Schmiermittel 14 gelangt zum unteren Lager 2. Anschließend strömt das Schmiermittel 14 vom unteren Lager 2 der Schwerkraft folgend zum unteren Reservoir 13. Die zweite Mikropumpe 24 fördert das Schmiermittel 14 dann vom unteren Reservoir 13 zum oberen Reservoir 22. Dies bedeutet, dass das Schmiermittel 14 durch die Mikropumpe 23, 24 innerhalb eines geschlossenen Fluid-Kreislaufs umgepumpt wird.

Auf die vorstehend beschriebene Weise werden das untere Lager 2 und das obere Lager 3 über die untere Düse 33 bzw. die obere Düse 17 fortwährend mit Schmiermittel 14 versorgt. Dabei sind die untere Düse 33 und die obere Düse 17 so dimensioniert, dass zum unteren Lager 2 und zum oberen Lager 3 jeweils eine ausreichende Schmiermittelmenge gelangt. Je nach Anwendungsfall wird dies dadurch erreicht, dass die untere Düse 33 und die obere Düse 17 gleichartig oder unterschicdlich ausgebildet werden.

Neben einer kontinuierlichen Schmiermittelzufuhr zu den Lagern 2, 3 besteht auch die Möglichkeit einer intermittierenden oder einer bedarfsgesteuerten Schmiermittelzufuhr. Beispielsweise kann die Schmiermittelzufuhr temperaturgesteuert erfolgen. Hierzu kann die Lageranordnung mit einem oder mit mehreren nicht figürlich dargestellten Temperatursensoren ausgestattet sein, um beispielsweise die Temperatur der Innenringe 5, 9, der Außenringe 6, 10 oder des Schmiermittel 14 zu messen. Die Temperaturwerte können auch dazu verwendet werden, die Lagervorspannung oder die Lebensdauer des Schmiermittels 14 zu ermitteln und zu überwachen.

Die Lageranordnung kann auch so abgewandelt werden, dass die Orientierung der Hohlwelle 1 von einer Ausrichtung parallel zur Vertikalen abweicht. Vorzugsweise beträgt die Abweichungjedoch nicht mehr als 30°.

### Bezugszeichcnliste

### Lageranordnung zur drehbaren Lagerung eines Maschinenteils

- 1: Hohlwelle
- 2: unteres Lager
- 3: oberes Lager
- 4: Gehäuse
- 5: Innenring
- 6: Außenring
- 7: Wälzkörper
- 8: Käfig
- 9: Innenring
- 10: Außenring
- 11: Wälzkörper
- 12: Käfig
- 13: unteres Reservoir
- 14: Schmiermittel
- 15: Schmiereinrichtung
- 16: unterer Kanal
- 17: obere Düse
- 18: oberer Kanal
- 19: Abdeckung
- 20: Innenraum
- 21: Ummantelung
- 22: oberes Reservoir
- 23: erste Mikropumpe
- 24: zweite Mikropumpe
- 25: Trennwand
- 26: Trennwand
- 27: Kabel
- 28: Stromanschluss
- 29: Verbindungsstück
- 30: Verbindungsstück
- 31: T-Stück
- 32: Verbindungsstück
- 33: untere Düse
- 34: Verbindungsstück
- 35: oberes Umlenkstück
- 36: Verbindungsstück
- 37: unteres Umlenkstück
- 38: Verbindungsstück

## Patentansprüche

1. Lageranordnung zur drehbaren Lagerung eines Maschinenteils (1), mit
- einem Lager (3),
- einem Reservoir (22) zur Aufnahme von Schmiermittel (14) und
- einer elektrischen Fördereinrichtung (23) zum Fördern des Schmiermittels (14),
wobei
- das Lager (3), das Reservoir (22) und die elektrische Fördereinrichtung (23) jeweils wenigstens zum Teil innerhalb eines gegen die Umgebung abgedichteten Innenraums (20) der Lageranordnung angeordnet sind, **dadurch gekennzeichnet, dass** das Lager (3), das Reservoir (22) und die elektrische Fördereinrichtung (23) als Bestandteile eines geschlossenen Fluid-Kreislaufs für das Schmiermittel (14) ausgebildet sind.

2. Lageranordnung nach Anspruch 1, **dadurch gekennzeichnet, dass** ein weiteres Lager (2) und/oder ein weiteres Reservoir (13) und/oder eine weitere elektrische Fördereinrichtung (24) wenigstens zum Teil innerhalb des Innenraums (20) angeordnet sind.

3. Lageranordnung nach einem der vorhergehenden Ansprüche, **dadurch gekennzeichnet, dass** das Lager (3) und/oder das Reservoir (22) und/oder die elektrische Fördereinrichtung (23) vollständig im Innenraum (20) angeordnet sind.

4. Lageranordnung nach einem der Ansprüche 2 oder 3, **dadurch gekennzeichnet, dass** das Lager (3) und/oder das weitere Lager (2) einen äußeren Lagerring (10, 6) aufweisen und die elektrische Fördereinrichtung (23) und/oder die weitere elektrische Fördereinrichtung (24) und/oder das Reservoir (22) und/oder das weitere Reservoir (13) vollständig radial innerhalb des Außendurchmessers des äußeren Lagerrings (10, 6) angeordnet sind.

5. Lageranordnung nach einem der Ansprüche 2 bis 4, **dadurch gekennzeichnet, dass** das Reservoir (22) und die elektrische Fördereinrichtung (23) und/oder die weitere elektrische Fördereinrichtung (24) als integrale Bestandteile einer Schmiereinrichtung (15) ausgebildet sind.

6. Lageranordnung nach Anspruch 5, **dadurch gekennzeichnet, dass** die Schmiereinrichtung (15) als ein Ringkörper ausgebildet ist.

7. Lageranordnung nach Anspruch 6, **dadurch gekennzeichnet, dass** die elektrische Fördereinrichtung (23) und/oder die weitere elektrische Fördereinrichtung (24) in einem ersten Umfangsabschnitt und das Reservoir (22) in einem zweiten Umfangsabschnitt des Ringkörpers angeordnet sind.

8. Lageranordnung nach einem der vorhergehenden Ansprüche, **dadurch gekennzeichnet, dass** die elektrische Fördereinrichtung (23) für eine Schmiermittelförderung vom Reservoir (22) zum Lager (3) ausgelegt ist.

9. Lageranordnung nach einem der vorhergehenden Ansprüche, **dadurch gekennzeichnet, dass** das Reservoir (22) im Betriebszustand der Lageranordnung in Schwerkraftrichtung unterhalb des Lagers (3) angeordnet ist.

10. Lageranordnung nach einem der Ansprüche 2 bis 9, **dadurch gekennzeichnet, dass** das weitere Reservoir (13) im Betriebszustand der Lageranordnung in Schwerkraftrichtung unterhalb des Reservoirs (22) und/oder unterhalb des weiteren Lagers (2) angeordnet ist.

11. Lageranordnung nach einem der Ansprüche 2 bis 10, **dadurch gekennzeichnet, dass** die weitere elektrische Fördereinrichtung (24) für eine Schmiermittelförderung vom weiteren Reservoir (13) zum Reservoir (22) ausgelegt ist.

12. Lageranordnung nach einem der vorhergehenden Ansprüche, **dadurch gekennzeichnet, dass** ein Anschluss (28) für eine externe Stromversorgung vorhanden ist.

13. Lageranordnung nach einem der Ansprüche 2 bis 12, **dadurch gekennzeichnet, dass** eine Düse (17) zur Schmiermittelzufuhr zum Lager (3) und/oder eine weitere Düse (33) zur Schmiermittelzufuhr zum weiteren Lager (2) vorhanden sind.

14. Lageranordnung nach einem der vorhergehenden Ansprüche, **dadurch gekennzeichnet, dass** wenigstens eine Sensoreinrichtung vorhanden ist.

15. Lageranordnung nach einem der vorhergehenden Ansprüche, **dadurch gekennzeichnet, dass** das Maschinenteil (1) als eine Welle, insbesondere als eine Welle eines Separators, ausgebildet ist.

## Claims

1. Bearing assembly for rotatable mounting of a maschine part (1), with
- a bearing (3),
- a reservoir (22) for the reception of lubricant (14), and
- an electric conveying device (23) for conveying the lubricant (14),
- the bearing (3), the reservoir (22) and the electric conveying device (23) being arranged in each case at least partially within an inner space (20), sealed off relative to the surroundings, of the bearing arrangement, **characterized in that** the bearing (3), the reservoir (22) and the electric conveying device (23) are designed as integral parts of a closed fluid circuit for the lubricant (14).

2. Bearing assembly according to Claim 1, **characterized in that** a further bearing (2) and/or a further reservoir (13) and/or a further electric conveying device (24) are arranged at least partially within the inner space (20).

3. Bearing assembly according to one of the preceding claims, **characterized in that** the bearing (3) and/or the reservoir (22) and/or the electric conveying device (23) are arranged completely in the inner space (20).

4. Bearing assembly according to either one of Claims 2 and 3, **characterized in that** the bearing (3) and/or the further bearing (2) have/has an outer bearing ring (10, 6), and the electric conveying device (23) and/or the further electric conveying device (24) and/or the reservoir (22) and/or the further reservoir (13) are/is arranged completely radially within the outside diameter of the outer bearing ring (10, 6).

5. Bearing assembly according to one of Claims 2 to 4, **characterized in that** the reservoir (22) and the electric conveying device (23) and/or the further electric conveying device (24) are designed as integral parts of a lubricating device (15).

6. Bearing assembly according to Claim 5, **characterized in that** the lubricating device (15) is designed as a ring body.

7. Bearing assembly according to Claim 6, **characterized in that** the electric conveying device (23) and/or the further electric conveying device (24) are/is arranged in a first circumferential portion and the reservoir (22) in a second circumferential portion of the ring body.

8. Bearing assembly according to one of the preceding claims, **characterized in that** the electric conveying device (23) is designed for the conveyance of lubricant from the reservoir (22) to the bearing (3).

9. Bearing assembly according to one of the preceding claims, **characterized in that** the reservoir (22) is arranged below the bearing (3) in the direction of gravity when the bearing arrangement is in the operating state.

10. Bearing assembly according to one of Claims 2 to 9, **characterized in that** the further reservoir (13) is arranged below the reservoir (22) and/or below the further bearing (2) in the direction of gravity when the bearing arrangement is in the operating state.

11. Bearing assembly according to one of Claims 2 to 10, **characterized in that** the further electric conveying device (24) is designed for the conveyance of lubricant from the further reservoir (13) to the reservoir (22).

12. Bearing assembly according to one of the preceding claims, **characterized in that** a connection (28) for an external power supply is present.

13. Bearing assembly according to one of Claims 2 to 12, **characterized in that** a nozzle (17) for the supply of lubricant to the bearing (3) and/or a further nozzle (33) for the supply of lubricant to the further bearing (2) are/is present.

14. Bearing assembly according to one of the preceding claims, **characterized in that** at least one sensor device is present.

15. Bearing assembly according to one of the preceding claims, **characterized in that** the maschine part (1) is designed as a shaft, in particular as a shaft of a separator.

## Revendications

1. Agencement de palier de roulement destiné à maintenir de façon pivotante une partie de machine (1), avec :
un palier de roulement (3) ;
un réservoir (22) destiné à contenir un moyen lubrifiant (14) ; et
un dispositif de transport électrique (23) permettant de transporter le moyen lubrifiant (14) ;
le palier de roulement (3), le réservoir (22) et le dispositif de transport électrique (23) étant respectivement disposés au moins en partie à l'intérieur d'un espace intérieur (20) de l'agencement de palier de roulement étanchéifié par rapport à l'environnement ;
**caractérisé en ce que** le palier de roulement (3), le réservoir (22) et le dispositif de transport électrique (23) prennent la forme de composants d'un circuit hydraulique fermé prévu pour le moyen lubrifiant (14).

2. Agencement de palier de roulement selon la revendication 1, **caractérisé en ce qu'**un palier de roulement (2) supplémentaire et/ou un réservoir (13) supplémentaire et/ou un dispositif de transport électrique (24) supplémentaire sont au moins disposés en partie à l'intérieur de l'espace intérieur (20).

3. Agencement de palier de roulement selon l'une quelconque des revendications précédentes, **caractérisé en ce que** le palier de roulement (3) et/ou le réservoir (22) et/ou le dispositif de transport électrique (23) sont entièrement disposés dans l'espace intérieur (20).

4. Agencement de palier de roulement selon l'une quelconque des revendications 2 ou 3, **caractérisé en ce que** le palier de roulement (3) et/ou le palier de roulement (2) supplémentaire comportent une bague de palier de roulement (10, 6) extérieure et que le dispositif de transport électrique (23) et/ou le dispositif de transport électrique (24) supplémentaire et/ou le réservoir (22) et/ou le réservoir (13) supplémentaire sont entièrement disposés dans le plan radial à l'intérieur du diamètre extérieur de la bague de palier de roulement (10, 6) extérieure.

5. Agencement de palier de roulement selon l'une quelconque des revendications 2 à 4, **caractérisé en ce que** le réservoir (22) et le dispositif de transport électrique (23) et/ou le dispositif de transport électrique (24) supplémentaire font partie intégrante d'un dispositif de graissage (15).

6. Agencement de palier de roulement selon la revendication 5, **caractérisé en ce que** le dispositif de graissage (15) prend la forme d'un corps annulaire.

7. Agencement de palier de roulement selon la revendication 6, **caractérisé en ce que** le dispositif de transport électrique (23) et/ou le dispositif de transport électrique (24) supplémentaire sont disposés dans une première section périphérique et que le réservoir (22) est disposé dans une deuxième section périphérique du corps annulaire.

8. Agencement de palier de roulement selon l'une quelconque des revendications précédentes, **caractérisé en ce que** le dispositif de transport électrique (23) est conçu pour le transport d'un moyen lubrifiant du réservoir (22) au palier de roulement (3).

9. Agencement de palier de roulement selon l'une quelconque des revendications précédentes, **caractérisé en ce que** le réservoir (22) est disposé dans la direction de la gravité en dessous du palier de roulement (3) dans l'état de fonctionnement de l'agencement de palier de roulement.

10. Agencement de palier de roulement selon l'une quelconque des revendications 2 à 9, **caractérisé en ce que** le réservoir (13) supplémentaire est disposé dans la direction de la gravité en dessous du réservoir (22) et/ou en dessous du palier de roulement (2) supplémentaire dans l'état de fonctionnement de l'agencement de palier de roulement.

11. Agencement de palier de roulement selon l'une quelconque des revendications 2 à 10, **caractérisé en ce que** le dispositif de transport électrique (24) supplémentaire est conçu pour le transport d'un moyen lubrifiant du réservoir (13) supplémentaire au réservoir (22).

12. Agencement de palier de roulement selon l'une quelconque des revendications précédentes, **caractérisé par** la présence d'une borne (28) permettant le raccordement à une alimentation en courant externe.

13. Agencement de palier de roulement selon l'une quelconque des revendications 2 à 12, **caractérisé par** la présence d'une buse (17) permettant l'amenée de moyen lubrifiant au palier de roulement (3) et/ou d'une buse (33) supplémentaire permettant l'amenée de moyen lubrifiant au palier de roulement (2) supplémentaire.

14. Agencement de palier de roulement selon l'une quelconque des revendications précédentes, **caractérisé par** la présence d'au moins un dispositif de détection.

15. Agencement de palier de roulement selon l'une quelconque des revendications précédentes, **caractérisé en ce que** ladite partie de machine (1) prend la forme d'un arbre, notamment d'un arbre de séparateur.
